(19) **Europäisches Patentamt / European Patent Office / Office européen des brevets**

(11) **EP 4 542 322 A1**

(12) **EUROPEAN PATENT APPLICATION**
published in accordance with Art. 153(4) EPC

(43) Date of publication:
**23.04.2025 Bulletin 2025/17**

(21) Application number: **23823483.5**

(22) Date of filing: **28.03.2023**

(51) International Patent Classification (IPC):
**G05B 23/02** (2006.01)

(52) Cooperative Patent Classification (CPC):
**G05B 23/02**

(86) International application number:
**PCT/JP2023/012678**

(87) International publication number:
**WO 2023/243179 (21.12.2023 Gazette 2023/51)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **16.06.2022 JP 2022097592**

(71) Applicant: **Hitachi Industrial Products, Ltd.
Tokyo 101-0021 (JP)**

(72) Inventors:
- **MAGARA, Yohei**
  **Tokyo 100-8280 (JP)**
- **KASAHARA, Takayasu**
  **Tokyo 100-8280 (JP)**
- **NISHIDA, Kohei**
  **Tokyo 101-0021 (JP)**
- **KAMEDA, Ryo**
  **Tokyo 101-0021 (JP)**

(74) Representative: **Mewburn Ellis LLP
Aurora Building
Counterslip
Bristol BS1 6BX (GB)**

(54) **ABNORMALITY CAUSE ESTIMATION DEVICE, ABNORMALITY CAUSE ESTIMATION METHOD, AND ABNORMALITY CAUSE ESTIMATION PROGRAM**

(57) The present invention estimates the cause of abnormality of equipment easily and with high accuracy. An abnormality cause estimation device (1) has: a measurement value input unit (2) that receives measurement values obtained from sensors installed in equipment; an abnormality determination unit (4) that determines whether or not there is an abnormality in the measurement values; an abnormality cause estimation unit (6) that estimates the cause of abnormality in the equipment by inputting the presence or absence of abnormality in the measurement values into a selected one of abnormality event models having undergone division in advance on the basis of abnormal events assumed to occur in the equipment; and a result output unit (9) that outputs the estimation result of the cause of the abnormality.

FIG. 1

## Description

## TECHNICAL FIELD

The present invention relates to an abnormality cause estimation device, an abnormality cause estimation method, and an abnormality cause estimation program.

## BACKGROUND ART

In chemical plants and power generation plants, introduction of state monitoring and diagnostic techniques for plant devices has been underway for the purpose of achieving stable operations and streamlining of maintenance works. In the case where abnormality has occurred in a plant device, continuation of the operation, reduction in time for maintenance work, and the like are expected by detecting the abnormality in an early stage and conducting measures against the abnormality. To more effectively conduct measures, a diagnostic technique of estimating the cause of abnormality in the case where the abnormality has occurred is important.

As an example of diagnostic techniques, Abstract of Patent Literature 1 states that "A phenomenon pattern extraction unit 104 extracts a phenomenon pattern of a past sensor signal of equipment. A related information correlation unit 105 correlates the sensor signal based on maintenance history information. A phenomenon pattern classification reference creation unit 107 creates a classification reference for classifying a phenomenon pattern based on the extracted phenomenon pattern and a work keyword included in the maintenance history information correlated with the sensor signal as the source of the phenomenon pattern. A phenomenon pattern classification unit 108 classifies the phenomenon pattern based on the classification reference. A diagnosis model creation unit 109 creates a diagnostic model for estimating a work keyword suggested to a maintenance work based on the classified phenomenon pattern and the work keyword."

## CITATION LIST

### Patent Literature

Patent Literature 1: JP2015-148867A

## SUMMARY OF INVENTION

### Technical Problem

The configuration, connections, and measurement parameters of large-sized equipment such as a compressor are different for each plant. For this reason, there has been a problem that in newly constructing a diagnostic model for diagnosing the cause of abnormality of certain equipment, it is necessary to construct the diagnostic model once again in order to handle not only the device configurations but also connection forms among devices and differences in measurement parameters.

In addition, since large-sized equipment such as a compressor affects the productivity of a plant, a high reliability is demanded in the first place. For this reason, the frequency of failures of equipment is relatively low, and there has been a case where data at the time of occurrence of abnormality is insufficient in order to correlate measurement parameters and the cause of the abnormality by means of machine learning such as a neural network from data at the time of occurrence of actual abnormality.

In view of this, an object of the present invention is to estimate the cause of abnormality of equipment easily and with high accuracy.

### Solution to Problem

To solve the above-described problem, a first aspect of the present invention includes: a measurement value input unit which inputs a measurement value obtained from a sensor provided in equipment; an abnormality determination unit which determines presence or absence of abnormality in the measurement value; an abnormality cause estimation unit which estimates a cause of abnormality of the equipment by inputting the presence or absence of abnormality in the measurement value to an abnormality event model selected from abnormality event models having undergone division in advance based on abnormality events assumed to occur in the equipment; and a result output unit which outputs a result of estimating the cause of the abnormality.

A second aspect of the present invention includes the steps of: inputting, by a measurement value input unit, a measurement value obtained from a sensor provided in equipment; determining, by an abnormality determination unit, presence or absence of abnormality in the measurement value; and estimating, by an abnormality cause estimation unit, a cause of abnormality of the equipment by inputting the presence or absence of abnormality in the measurement value to an abnormality event model selected from abnormality event models having undergone division in advance based on abnormality events assumed to occur in the equipment.

An abnormality cause estimation program of the present invention is for causing a computer to execute the procedures of: inputting a measurement value obtained from a sensor provided in equipment; determining presence or absence of abnormality in the measurement value; and estimating a cause of abnormality of the equipment by inputting the presence or absence of abnormality in the measurement value to an abnormality event model selected from abnormality event models having undergone division in advance based on abnormality events assumed to occur in the equipment.

The other solutions will be described in DESCRIPTION OF

EMBODIMENTS.

## Advantageous Effects of Invention

The present invention makes it possible to estimate the cause of abnormality of equipment easily and with high accuracy.

## BRIEF DESCRIPTION OF DRAWINGS

[FIG. 1] FIG. 1 is a configuration diagram of an abnormality cause estimation device according to the present embodiment.
[FIG. 2] FIG. 2 is a diagram showing equipment of a first example.
[FIG. 3] FIG. 3 is an example of measurement values handled by the abnormality cause estimation device.
[FIG. 4] FIG. 4 is a diagram showing details of an abnormality cause estimation model and an abnormality event model database.
[FIG. 5] FIG. 5 is a diagram showing equipment of a second example.
[FIG. 6] FIG. 6 is a diagram showing connection portions of the abnormality event model.

## DESCRIPTION OF EMBODIMENTS

Hereinafter, modes for carrying out the present invention will be described in detail with reference to the drawings. Note that the same constituent elements are denoted by the same reference signs throughout the drawings.

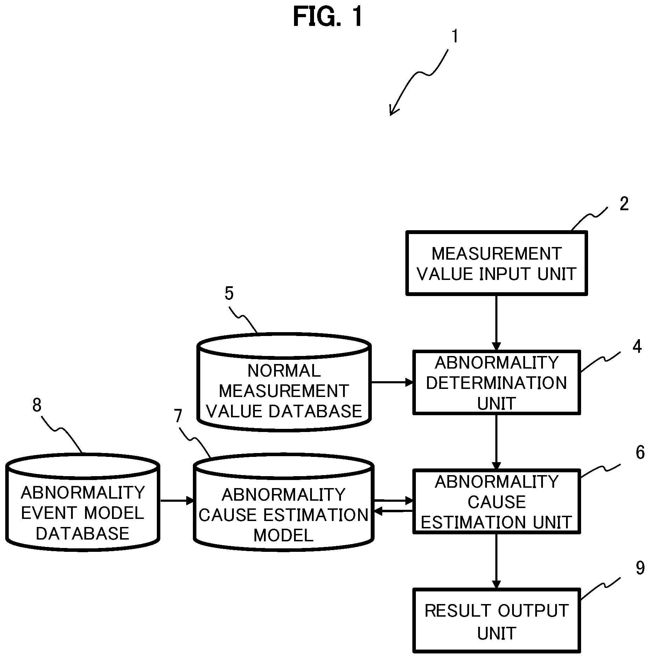

FIG. 1 is a configuration diagram of an abnormality cause estimation device 1 according to the present embodiment.
The abnormality cause estimation device 1 includes a measurement value input unit 2, an abnormality determination unit 4, a normal measurement value database 5, an abnormality cause estimation unit 6, an abnormality cause estimation model 7, an abnormality event model database 8, and a result output unit 9. This abnormality cause estimation device 1 is a device which monitors the state of equipment, and in the case where abnormality has occurred, estimates the cause of the abnormality of the equipment easily and with high accuracy. Note that the functional units of the abnormality cause estimation device 1 may be implemented by a CPU, which is not shown, executing an abnormality cause estimation program.
The measurement value input unit 2 inputs measurement values obtained from sensors installed in the equipment to the abnormality determination unit 4. The present embodiment shows a case where a centrifugal compressor and a driving machine are subjected to the estimation of a cause of abnormality. Note that the measurement value input unit 2 may monitor the sensors installed in the equipment and obtain measurement values from the sensors in real-time. Moreover, the measurement value input unit 2 includes a storage unit that stores a log of measurement values previously measured by the sensors installed in the equipment, and the measurement value input unit 2 may obtain the log of the measurement values stored in the storage unit, without limitation.
The abnormality determination unit 4 determines the presence or absence of abnormality in the measurement values inputted by the measurement value input unit 2.
The abnormality cause estimation unit 6 inputs, as a measurement parameter, the presence or absence of abnormality in the measurement values to an abnormality event model selected from abnormality event models having undergone division in advance based on abnormality events assumed to occur in the equipment and estimates the cause of the abnormality of the equipment. This abnormality cause estimation unit 6 estimates the cause of the abnormality of the equipment by inputting, as a measurement parameter, the presence or absence of abnormality in the measurement values to abnormality event models which correspond to actually installed equipment and which are selected and combined from abnormality event models having undergone division in advance based on abnormality events assumed to occur in the equipment.
The result output unit 9 outputs a result of estimation of the cause of the abnormality, which has been estimated by the abnormality cause estimation unit 6.
The normal measurement value database 5 is a database which stores measurement values obtained from the sensors installed in the equipment at the normal time. The abnormality determination unit 4 refers to the normal measurement value database 5 and determines the presence or absence of abnormality in the measurement values inputted by the measurement value input unit 2. The configuration is not limited to this, and the abnormality determination unit 4 may refer to a database which stores normal ranges of the measurement values, and determine the presence or absence of abnormality in the measurement values inputted by the measurement value input unit 2.
The abnormality event model database 8 is a database which stores, regarding abnormality events relating to the equipment, abnormality event models in each of which a relation between an abnormality event and a parameter which is influenced at the time of occurrence of the abnormality event is organized. In the abnormality event model, an influence parameter in which abnormality is assumed to occur at the time of occurrence of a target abnormality event and the cause of the abnormality have been correlated in advance based on a physical causal connection. When the abnormality event model is applied to the equipment, the abnormality cause estimation unit 6 connects an influence parameter corresponding to an actual measurement parameter.

The abnormality cause estimation model 7 is a directed graphical model for estimating the cause of abnormality depending on an abnormality event which can occur in the equipment, and is configured with a Bayesian network, for example. The abnormality cause estimation model 7 is constructed by combining abnormality event models stored in the abnormality event model database 8. The abnormality cause estimation unit 6 infers the probability of occurrence of the cause of each abnormality from the presence or absence of abnormality in the measurement values by using the abnormality cause estimation model 7. However, in the case where there is no measurement parameter corresponding to the influence parameter of the abnormality event model, the abnormality cause estimation unit 6 excludes this influence parameter from calculation of the probability which is inferred by the Bayesian network. The abnormality event model contains a connection portion in which an influence parameter in common with other equipment which can be connected to the equipment has been set in advance.

This abnormality cause estimation device 1 makes it possible to estimate the cause of abnormality of the equipment easily and with high accuracy.

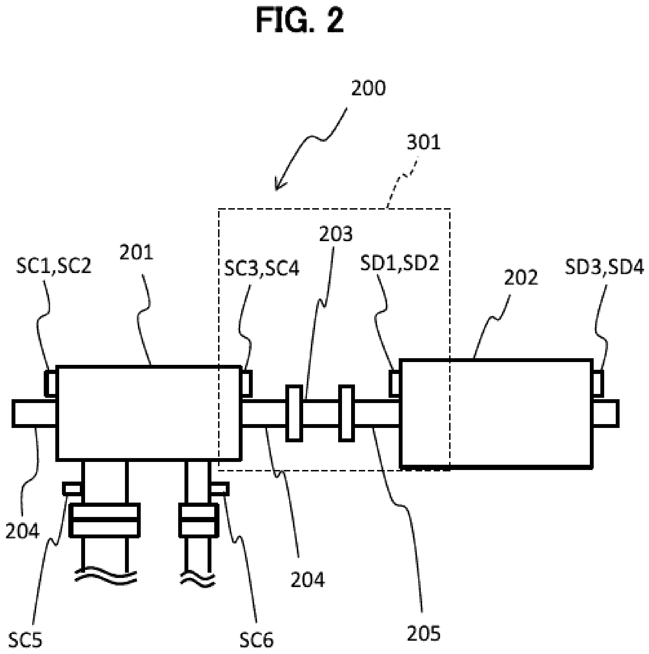

FIG. 2 is a diagram showing equipment of a first example.

A centrifugal compressor train 200 is a rotating machine and is equipment to be handled by the abnormality cause estimation device 1. The centrifugal compressor train 200 is configured by connecting a rotor 204 of a centrifugal compressor 201 and a rotor 205 of a driving machine 202 with a coupling 203. In this way, the driving force of the driving machine 202 is transmitted to the rotor 204 of the centrifugal compressor 201.

The centrifugal compressor 201 is provided with sensors such as four shaft vibration sensors SC1 to SC4 which monitor shaft vibrations of the rotor 204, a suction pressure sensor SC5 which monitors a suction pressure, and a discharge pressure sensor SC6 which monitors a discharge pressure.

The driving machine 202 is provided with sensors such as four shaft vibration sensors SD1 to SD4 which monitor shaft vibrations of the rotor 205. Although only some of the sensors are described here, the equipment is provided with various other sensors besides these.

An influence range 301 is a range which is influenced by a failure of the coupling of the centrifugal compressor 201. The influence range 301 contains the shaft vibration sensors SD1 to SD4 of the centrifugal compressor 201 and the shaft vibration sensors SD1 and SD2 of the driving machine 202.

The description is continued referring back to FIG. 1. The measurement value input unit 2 inputs, to the abnormality determination unit 4, measurement values such as shaft vibrations obtained from the shaft vibration sensors SC1 to SC4 of the centrifugal compressor 201 and the shaft vibration sensors SD1 to SD4 of the driving machine 202, a suction pressure obtained from the suction pressure sensor SC5, and a discharge pressure obtained from the discharge pressure sensor SC6, which are installed in the centrifugal compressor train 200.

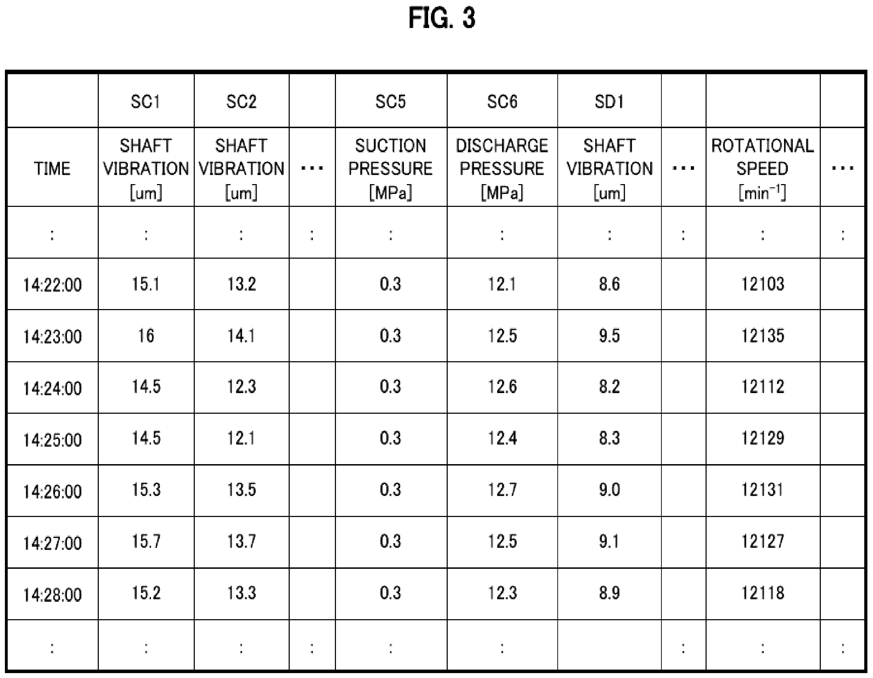

FIG. 3 is an example of measurement values to be handled by the abnormality cause estimation device 1.

Each row indicates a time at which each sensor detected a measurement value. Each column indicates which sensor detected the measurement value.

In SC1 column, a measurement value of a shaft vibration obtained from the shaft vibration sensor SC1 is stored. In SC2 column, a measurement value of a shaft vibration obtained from the shaft vibration sensor SC2 is stored. In SC5 column, a measurement value of a suction pressure obtained from the suction pressure sensor SC5 is stored. In SC6 column, a measurement value of a discharge pressure obtained from the discharge pressure sensor SC6 is stored. Note that FIG. 3 is shown where measurement values of shaft vibrations obtained from the shaft vibration sensors SC3 and SC4 are omitted.

In SD1 column, a measurement value of a shaft vibration obtained from the shaft vibration sensor SD1 is stored. In the column of ROTATIONAL SPEED, a measurement value of a rotational speed sensor, which is not shown, is stored. Similarly, in SD2 to SD4 columns, measurement values of shaft vibration sensors SD2 to SD4 and the like are stored; however, description of measurement values of the other sensors is omitted here.

The description is continued referring back to FIG. 1. The abnormality determination unit 4 has a function of determining the presence or absence of abnormality for a measurement value inputted by the measurement value input unit 2. The abnormality of a measurement value means that the measurement value is deviated from a predetermined normal range, and there is a possibility that a normal function of the equipment will be impaired or has been impaired. The abnormality determination unit 4 acquires measurement values at the normal time of the centrifugal compressor 201 from the normal measurement value database 5, and determines whether or not there is abnormality in measurement values based on the measurement values at the normal time. For such processing of the abnormality determination unit 4, the Mahalanobis-Taguchi method is used, for example; however, the processing is not limited to this. The abnormality determination unit 4 outputs a result of determining the presence or absence of abnormality in each measurement value to the abnormality cause estimation unit 6.

The abnormality cause estimation unit 6 has a function of estimating the cause of abnormality based on the result of determination of abnormality received from the abnormality determination unit 4. The abnormality cause estimation unit 6 has constructed the abnormality cause estimation model 7 in advance in accordance with abnormality events which can occur in the configuration of the centrifugal compressor train 200.

Then, the abnormality cause estimation unit 6 sends a combination of the presence or absence of abnormality in each measurement value as an input to the abnormality cause estimation model 7 constructed in advance, and estimates the cause of the abnormality of the equipment. Note that although the present embodiment will be described by using a Bayesian network in which causal connections are organized with a directed acyclic graph structure as the abnormality cause estimation model 7, the configuration is not limited to this.

In the Bayesian network, from a probability P(A) of occurrence of an event A which becomes a cause of the abnormality, a probability P(B) of occurrence of abnormality of a parameter B, and a conditional probability P(B|A) that the parameter B becomes abnormal at the time of occurrence of the event A, a probability P(A|B) that the event A is a cause when the parameter B is abnormal can be obtained based on the Bayes' theorem. This is expressed by formula (1).

[Math. 1]

$$P(A|B) = P(B|A) \left. P(A) \middle/ P(B) \right. \cdots (1)$$

The abnormality cause estimation unit 6 obtains a probability that each abnormality event is a cause when the presence or absence of abnormality in the measurement value is given as the measurement parameter, by referring to the abnormality cause estimation model 7 and repeating such processing. The abnormality cause estimation model 7 is constructed by combining the abnormality event models stored in the abnormality event model database 8. In the Bayesian network, it is unnecessary to input observation values to all explanation variables at the time of prediction unlike a neural network or the like. In the Bayesian network, even when explanation variables are insufficient, it is possible to infer and predict a cause of the abnormality which can be found in the given range.

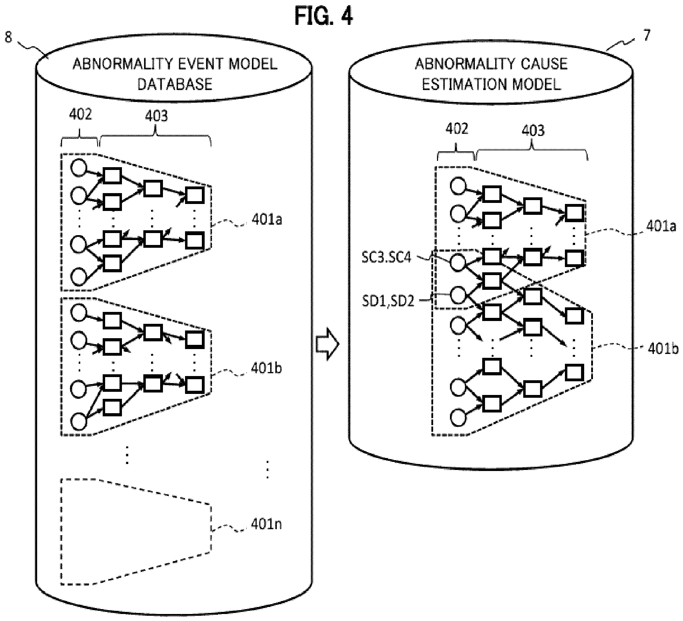

FIG. 4 is a diagram showing details of the abnormality cause estimation model 7 and the abnormality event model database 8.

In the abnormality event model database 8, regarding equipment of the centrifugal compressor train 200, abnormality event models 401a to 401n in each of which a relation between an abnormality event of the equipment and a parameter which will be influenced at the time of occurrence of this abnormality event is organized are stored. The abnormality event models 401a to 401n have undergone division in advance based on abnormality events assumed to occur in the equipment of the centrifugal compressor train 200.

The abnormality event model 401a is constructed based on an abnormality event of a coupling defect which occurs in the centrifugal compressor 201. The abnormality event model 401a is configured such that influence parameters 402 which are indicated by circular icons and abnormality factors 403 which are indicated by rectangular icons are connected by arrows which indicate causal connections. Moreover, in the abnormality event model 401a, the abnormality factors 403 are connected by arrows which indicate causal connections in a hierarchical manner. The abnormality cause estimation unit 6 obtains a probability of each abnormality factor 403 by connecting the presence or absence of abnormality in measurement values, which are actual measurement parameters, to the influence parameters 402, and thereby estimates the cause of abnormality of a coupling defect which occurs in the centrifugal compressor 201.

This abnormality event model 401a includes abnormality events attributable to problems within a main body range of the centrifugal compressor 201, such as an increase in imbalance of the rotor 204 of the centrifugal compressor 201 and abnormality of the bearing sliding surface, for example. For the abnormality cause estimation unit 6, the problems of the coupling 203 which influence the shaft vibrations of the rotor 204 of the centrifugal compressor 201 includes events which appear as abnormality of the centrifugal compressor 201 attributable to a cause outside the range of the main body of the centrifugal compressor 201. The influence range 301 of FIG. 2 is a range in which abnormality events which appear as coupling defects occurring in the centrifugal compressor 201 are detected.

In the case where a problem has occurred in the coupling 203, there is a high possibility that abnormality occurs in measurement values obtained from the shaft vibration sensors SC3 and SC4 of the rotor 204 of the centrifugal compressor 201. In addition, there is also a high possibility that abnormality occurs in the shaft vibration sensors SD1 and SD2 of the driving machine 202 connected with the coupling 203 in between. Hence, the abnormality event model 401a includes results of determining the presence or absence of abnormality of the measurement values obtained from the shaft vibration sensors SD1 and SD2 of the driving machine 202 as influence parameters to be inputted. In this way, by analogizing the physically influencing range from connection relations of the equipment and the like, it is possible to appropriately configure the abnormality event model 401a.

The abnormality event model 401b is constructed based on an abnormality event of a crack of an impeller which occurs in the centrifugal compressor 201. The abnormality event model 401b is also configured such that the influence parameters 402 indicated by circular icons and abnormality factors 403 indicated by rectangular icons are connected by arrows which indicate causal connections. Moreover, in the abnormality event model 401b, the abnormality factors 403 are connected by arrows which indicate causal connections in a hierarchical manner. The abnormality cause estimation unit 6 obtains a probability of each abnormality factor 403 by connecting the presence or absence of abnormality in measurement values, which are actual measurement parameters, to the influence parameters 402, and thereby estimates the cause of abnormality of a crack of the impeller which occurs in the centrifugal compressor 201. Among the abnormality factors 403, those on the right end portion are causes of abnormality of a crack of the impeller which occurs in the centrifugal compressor 201.

The abnormality event model 401b includes results of determining the presence or absence of abnormality in the measurement values obtained from the shaft vibration sensors SC3 and SC4 of the centrifugal compressor 201 in the influence parameters 402. The influence range 301 of FIG. 2 is a range in which abnormality events of cracks of the impeller which occur in the centrifugal compressor 201 are detected. In this way, by analogizing the physically influencing range, it is possible to appropriately configure the abnormality event model 401b.

In this way, by modeling the ranges which are influenced at the time of occurrence of events but not the ranges of devices, it becomes possible to narrow abnormality events which cannot be narrowed from only results of determining the presence or absence of abnormality in measurement values within the ranges of the devices. In addition, there are measurement parameters used in common for the abnormality event model 401a and the abnormality event model 401b like the present embodiment. This makes it possible to effectively estimate the cause of abnormality from limited information.

The range which is influenced at the time of occurrence of events is determined based on physical connection relations of devices and abnormality cases in the past. The physical connection relations of the devices are determined from a design specification. In the centrifugal compressor train 200 of the first example, one side of the rotor 204 of the centrifugal compressor 201 and the rotor 205 of the driving machine 202 are connected by the coupling 203. Hence, the administrator of the centrifugal compressor train 200 adds results of determining the presence or absence of abnormality in the measurement values obtained from the shaft vibration sensors SD1 and SD2 of the rotor 205 of the driving machine 202 in estimating the cause of the abnormality of a coupling defect which occurs in the centrifugal compressor 201.

Moreover, the administrator of the centrifugal compressor train 200 adds results of determining the presence or absence of abnormality in the measurement values obtained from the shaft vibration sensors SC3 and SC4 of the rotor 204 of the centrifugal compressor 201 and results of determining the presence or absence of abnormality in the measurement values obtained from the shaft vibration sensors SD1 and SD2 of the rotor 205 of the driving machine 202 in estimating the cause of the abnormality of a crack of the impeller which occurs in the centrifugal compressor 201.

Here, a second example in which the other side of the rotor 204 of the centrifugal compressor 201 and a rotor 204E of a centrifugal compressor 201E are connected by a coupling 203E will be considered.

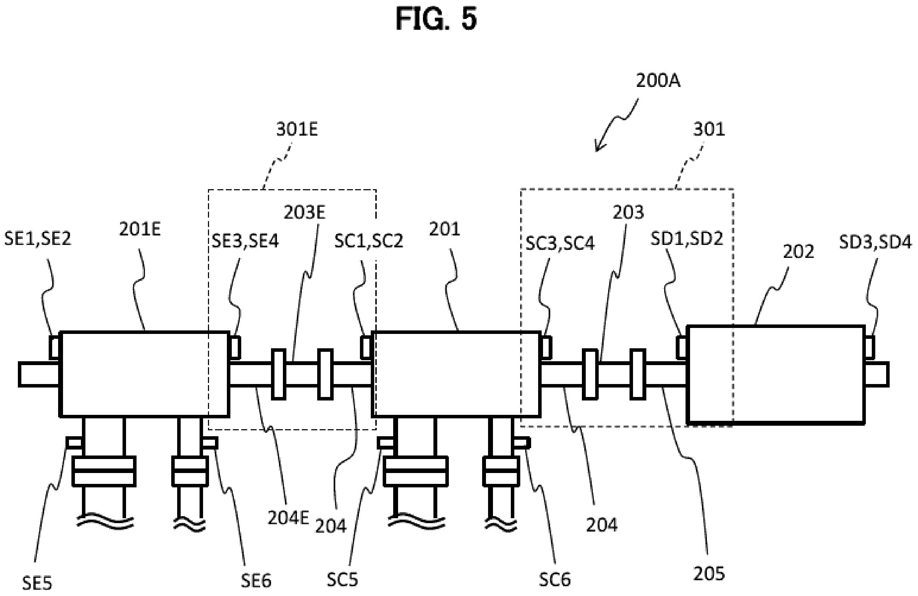

FIG. 5 is a diagram showing equipment of the second example.

A centrifugal compressor train 200A is equipment to be handled by the abnormality cause estimation device 1. The centrifugal compressor train 200A is configured by connecting one side of the rotor 204 of the centrifugal compressor 201 and the rotor 205 of the driving machine 202 with the coupling 203. Moreover, the centrifugal compressor train 200 is configured by connecting the other side of the rotor 204 of the centrifugal compressor 201 and the rotor 204E of the centrifugal compressor 201E with the coupling 203E. In this way, the driving force of the driving machine 202 is transmitted to the rotor 204 of the centrifugal compressor 201 and to the rotor 204E of the centrifugal compressor 201E.

The centrifugal compressor 201E is provided with sensors such as four shaft vibration sensors SE1 to SE4 which monitor shaft vibrations of the rotor 204E, a suction pressure sensor SE5 which monitors a suction pressure, and a discharge pressure sensor SE6 which monitors a discharge pressure.

The description of the operation regarding the second example is continued referring back to FIG. 1. The measurement value input unit 2 inputs, to the abnormality determination unit 4, measurement values such as shaft vibrations obtained from the shaft vibration sensors SC1 to SC4 of the centrifugal compressor 201, shaft vibration sensors SD1 to SD4 of the driving machine 202, and the like, a suction pressure obtained from the suction pressure sensor SC5 and the like, a discharge pressure obtained from the discharge pressure sensor SC6 and the like, which are installed in the centrifugal compressor train 200A. Moreover, the measurement value input unit 2 inputs, to the abnormality determination unit 4, measurement values such as shaft vibrations obtained from the shaft vibration sensors SE1 to SE4 of the centrifugal compressor 201E and the like, a suction pressure obtained from the suction pressure sensor SE5 and the like, and a discharge pressure obtained from the discharge pressure sensor SE6 and the like. The abnormality determination unit 4 determines the presence or absence of abnormality in the measurement values inputted by the measurement value input unit 2.

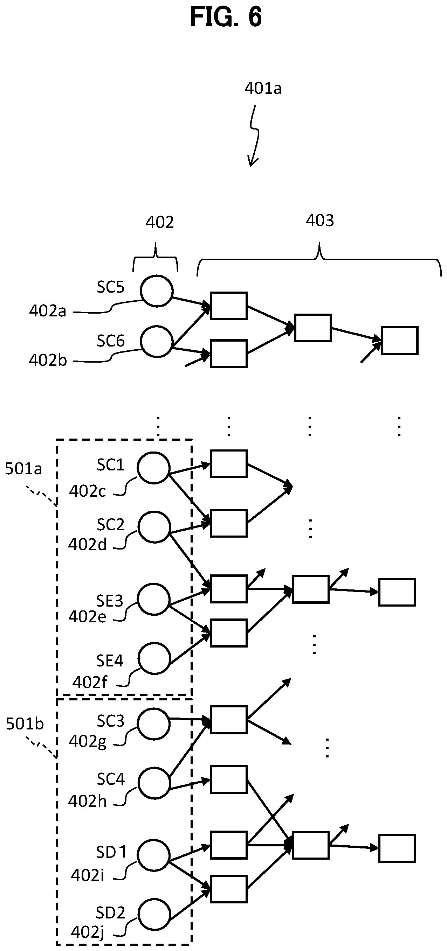

FIG. 6 is a diagram showing connection portions 501 of the abnormality event model 401a. In the description of FIG. 6, reference signs of FIG. 5 are used as appropriate.

The abnormality event model 401a is configured such that influence parameters 402 which are indicated by circular icon and abnormality factors 403 which are indicated by rectangular icons are connected by arrows which indicate causal connections. Moreover, in the abnormality event model 401a, the abnormality factors 403 are connected by arrows which indicate causal connections in a hierarchical manner.

To an influence parameter 402a, a result of determining the presence or absence of abnormality in the measurement value of the suction pressure obtained from the suction pressure sensor SC5 shown in FIG. 5 is connected. To an influence parameter 402b, a result of determining the presence or absence of abnormality in the measurement value of the discharge pressure obtained from the discharge pressure sensor SC6 shown in FIG. 5 is connected.

A connection portion 501a includes influence parameters 402c to 402f. The connection portion 501a is a Bayesian network corresponding to an influence range 301E which is influenced by physical connection between the centrifugal compressor 201 and the centrifugal compressor 201E.

To the influence parameters 402c and 402d, results of determining the presence or absence of abnormality in the measurement values of the shaft vibrations obtained from the shaft vibration sensors SC1 and SC2 are connected. To the influence parameters 402e and 402f, results of determining the presence or absence of abnormality in the measurement values of the shaft vibrations obtained from the shaft vibration sensors SE3 and SE4 of the centrifugal compressor 201E are connected. That is, to the influence parameters 402c to 402f, the presence or absence of abnormality in measurement values of the shaft vibration sensors provided near the coupling which connects the rotor of the rotating machine is connected as a measurement parameter.

A connection portion 501b includes influence parameters 402g to 402j. The connection portion 501b is a Bayesian network corresponding to an influence range 301 which is influenced by physical connection between the centrifugal compressor 201 and the driving machine 202. In the connection portion 501b, an influence parameter in common with the driving machine 202 which can be connected to the centrifugal compressor 201 has been set in advance.

To the influence parameters 402g and 402h, results of determining the presence or absence of abnormality in the measurement values of the shaft vibrations obtained from the shaft vibration sensors SC3 and SC4 are connected. To the influence parameters 402i and 402j, results of determining the presence or absence of abnormality in the measurement values of the shaft vibration obtained from the shaft vibration sensors SD1 and SD2 of the driving machine 202 are connected. That is, to the influence parameters 402g to 402j, the presence or absence of abnormality in measurement values of the shaft vibration sensors provided near the coupling which connects the rotor of the rotating machine is connected as a measurement parameter.

As shown in FIG. 6, the connection portions 501a and 501b and the like of the abnormality event model 401a are prepared in advance for a plurality of assumed train configurations, and when the abnormality event model 401a is applied to actual diagnosis target equipment, the abnormality cause estimation unit 6 gives measurement parameters corresponding to influence parameters as input.

FIG. 6 shows the abnormality event model 401a including not only the connection portion 501b which is used in the present embodiment but also the connection portion 501a which is used in the case where the other centrifugal compressor 201E is connected on the side opposite to the driving machine 202 with the centrifugal compressor 201 interposed therebetween. In the connection portion 501a, information on the presence or absence of abnormality from the shaft vibration sensors SE3 and SE4 of the centrifugal compressor 201E, which is another rotating machine, is connected to the influence parameters 402e and 402f. Note that in the case where there is no measurement parameter corresponding to an influence parameter, a calculation of the probability using the influence parameter is excluded. This makes it possible for the abnormality cause estimation unit 6 to efficiently reduce the scale of calculations of probabilities while minimizing a decrease in the accuracy in cause estimation.

The result output unit 9 receives the results of determination of abnormality in the measurement values and the probability of the estimated cause of the abnormality from the abnormality cause estimation unit 6 and outputs these with a graph or a table as a result of diagnosis.

To diagnose the equipment of the second example, in the abnormality event model database 8, abnormality event models having undergone division in advance based on abnormality events assumed to occur in each rotating machine included in this centrifugal compressor train 200A are stored. For this reason, the abnormality cause estimation unit 6 can easily handle differences in connection forms and measurement parameters of devices in newly constructing abnormality event models for diagnosing the cause of abnormality of the centrifugal compressor train 200A.

Then, each abnormality event model contains connection portions in which influence parameters in common with other equipment which can be connected to the equipment have been set in advance. For this reason, since the abnormality cause estimation unit 6 can calculate hindrance factors which are influenced by influence parameters in common, the abnormality cause estimation unit 6 can reduce the amount of calculation for estimating the cause of the abnormality and estimate the cause of the abnormality in a short period of time.

In addition, in the abnormality event model of the present embodiment, an influence parameter in which abnormality is assumed to occur at the time of occurrence of a target abnormality event and the cause of abnormality are correlated by using the Bayesian network. For this reason, this makes it possible to easily construct abnormality event models for estimating the cause of the abnormality at the time of occurrence of abnormality even in equipment which has relatively low frequency of failures.

(Modification)

The present invention is not limited to the above-described embodiments, and encompasses various modifications. For example, the above-described embodiments have been described in detail to describe the present invention in an easily understandable manner, and the present invention is not unnecessarily limited to those including all the configurations described above. It is possible to replace part of the configuration of a certain embodiment with the configuration of another embodiment, and it is also possible to add the configuration of a certain embodiment to the configuration of another embodiment. In addition, it is also possible to add, remove, or replace another configuration with respect to part of the configuration of each embodiment.

Each of the configurations, functions, processors, processing units, and the like described above may be partially or entirely achieved with hardware such as an integrated circuit, for example. Each of the configurations, functions, and the like may be achieved in software by a processor interpreting and executing programs which achieve the respective functions. Information such as programs, tables, and files for achieving the respective functions may be placed in a storage device such as a memory, a hard disk, or an SSD (Solid State Drive) or a storage medium such as a flash memory card or a DVD (Digital Versatile Disk).

In each embodiment, as control lines and information line, those that are necessary for description are shown, and it cannot necessarily be said that all the control lines and the information lines are shown in terms of products. In practice, it is also possible to consider that almost all configurations are connected to one another.

**Reference Signs List**

1 abnormality cause estimation device
2 measurement value input unit
4 abnormality determination unit
5 normal measurement value database
6 abnormality cause estimation unit
7 abnormality cause estimation model
8 abnormality event model database
9 result output unit
200, 200A centrifugal compressor train (equipment)
201, 201E centrifugal compressor
202 driving machine
203, 203E coupling
204,204E rotor
205 rotor

SC5, SE5 suction pressure sensor
SC6, SE6 discharge pressure sensor
SC1 to SC4 shaft vibration sensor
SD1 to SD4 shaft vibration sensor
SE1 to SE4 shaft vibration sensor
401a to 401n abnormality event model
402, 402a to 402jinfluence parameter
403 abnormality factor
501 connection portion
501a connection portion
501b connection portion

**Claims**

1. An abnormality cause estimation device comprising:

   a measurement value input unit which inputs a measurement value obtained from a sensor provided in equipment;
   an abnormality determination unit which determines presence or absence of abnormality in the measurement value;
   an abnormality cause estimation unit which estimates a cause of abnormality of the equipment by inputting the presence or absence of abnormality in the measurement value to an abnormality event model selected from abnormality event models having undergone division in advance based on abnormality events assumed to occur in the equipment; and
   a result output unit which outputs a result of estimating the cause of the abnormality.

2. The abnormality cause estimation device according to claim 1, wherein the abnormality cause estimation unit estimates the cause of the abnormality of the equipment by inputting, as a measurement parameter, the presence or absence of abnormality in the measurement value to abnormality event models which correspond to actually installed equipment and which are selected and combined from the abnormality event models having undergone division in advance based on abnormality events assumed to occur in the equipment.

3. The abnormality cause estimation device according to claim 2, wherein information on the presence or absence of abnormality in the measurement value to be inputted is in common for a plurality of abnormality event models combined.

4. The abnormality cause estimation device according to claim 1, wherein in the abnormality event models, an influence parameter in which abnormality is assumed to occur at the time of occurrence of a target abnormality event and a cause of the abnormality have been correlated in advance based on a physical relation of the equipment, and when the abnormality event model is applied to the equipment, an influence parameter corresponding to an actual measurement parameter is connected.

5. The abnormality cause estimation device according to claim 4, wherein the abnormality event model uses a Bayesian network as a method for inferring a probability of occurrence of a cause of each abnormality from the presence or absence of abnormality in the measurement value.

6. The abnormality cause estimation device according to claim 5, wherein the abnormality event model contains a connection portion in which an influence parameter in common with other equipment which can be connected to the equipment has been set in advance.

7. The abnormality cause estimation device according to claim 6, wherein in a case where there is no measurement parameter corresponding to the influence parameter of the abnormality event model, the abnormality cause estimation unit excludes the influence parameter from a calculation of a probability inferred by the Bayesian network.

8. The abnormality cause estimation device according to claim 6, wherein

the equipment is a rotating machine, and
the presence or absence of abnormality in a measurement value of a shaft vibration sensor provided near a coupling which connects a rotor of the rotating machine is connected as a measurement parameter to an influence parameter corresponding to the connection portion.

9. An abnormality cause estimation method comprising the steps of:

inputting, by a measurement value input unit, a measurement value obtained from a sensor provided in equipment;
determining, by an abnormality determination unit, presence or absence of abnormality in the measurement value; and
estimating, by an abnormality cause estimation unit, a cause of abnormality of the equipment by inputting the presence or absence of abnormality in the measurement value to an abnormality event model selected from abnormality event models having undergone division in advance based on abnormality events assumed to occur in the equipment.

10. An abnormality cause estimation program for causing a computer to execute the procedures of:

inputting a measurement value obtained from a sensor provided in equipment;
determining presence or absence of abnormality in the measurement value; and
estimating a cause of abnormality of the equipment by inputting the presence or absence of abnormality in the measurement value to an abnormality event model selected from abnormality event models having undergone division in advance based on abnormality events assumed to occur in the equipment.

**Amended claims under Art. 19.1 PCT**

1. An abnormality cause estimation device comprising:

a measurement value input unit which inputs a measurement value obtained from a sensor provided in equipment;
an abnormality determination unit which determines presence or absence of abnormality in the measurement value;
an abnormality cause estimation unit which estimates a cause of abnormality of the equipment by inputting the presence or absence of abnormality in the measurement value to an abnormality event model selected from a plurality of abnormality event models having undergone division in advance based on abnormality events assumed to occur in the equipment, and each containing a connection portion in which an influence parameter in common with other equipment which can be connected to the equipment has been set in advance and having a measurement value used in common; and
a result output unit which outputs a result of estimating the cause of the abnormality.

2. The abnormality cause estimation device according to claim 1, wherein the abnormality cause estimation unit estimates the cause of the abnormality of the equipment by inputting, as a measurement parameter, the presence or absence of abnormality in the measurement value to abnormality event models which correspond to actually installed equipment and which are selected and combined from the abnormality event models having undergone division in advance based on abnormality events assumed to occur in the equipment.

3. The abnormality cause estimation device according to claim 2, wherein information on the presence or absence of abnormality in the measurement value to be inputted is in common for a plurality of abnormality event models combined.

4. The abnormality cause estimation device according to claim 1, wherein in the abnormality event models, an influence parameter in which abnormality is assumed to occur at the time of occurrence of a target abnormality event and a cause of the abnormality have been correlated in advance based on a physical relation of the equipment, and when the abnormality event model is applied to the equipment, an influence parameter corresponding to an actual measurement parameter is connected.

5. The abnormality cause estimation device according to claim 4, wherein the abnormality event model uses a Bayesian network as a method for inferring a probability of occurrence of a cause of each abnormality from the presence or absence of abnormality in the measurement value.

6. The abnormality cause estimation device according to claim 4, wherein in a case where there is no measurement parameter corresponding to the influence parameter of the abnormality event model, the abnormality cause estimation unit excludes the influence parameter from a calculation of a probability inferred by the Bayesian network.

7. The abnormality cause estimation device according to claim 4, wherein

the equipment is a rotating machine, and
the presence or absence of abnormality in a measurement value of a shaft vibration sensor provided near a coupling which connects a rotor of the rotating machine is connected as a measurement parameter to an influence parameter corresponding to the connection portion.

8. An abnormality cause estimation method comprising the steps of:

inputting, by a measurement value input unit, a measurement value obtained from a sensor provided in equipment;
determining, by an abnormality determination unit, presence or absence of abnormality in the measurement value; and
estimating, by an abnormality cause estimation unit, a cause of abnormality of the equipment by inputting the presence or absence of abnormality in the measurement value to an abnormality event model selected from a plurality of abnormality event models having undergone division in advance based on abnormality events assumed to occur in the equipment, and each containing a connection portion in which an influence parameter in common with other equipment which can be connected to the equipment has been set in advance and having a measurement value used in common.

9. An abnormality cause estimation program for causing a computer to execute the procedures of:

inputting a measurement value obtained from a sensor provided in equipment;
determining presence or absence of abnormality in the measurement value; and
estimating a cause of abnormality of the equipment by inputting the presence or absence of abnormality in the measurement value to an abnormality event model selected from a plurality of abnormality event models having undergone division in advance based on abnormality events assumed to occur in the equipment, and each containing a connection portion in which an influence parameter in common with other equipment which can be connected to the equipment has been set in advance and having a measurement value used in common.

# FIG. 1

1

2

MEASUREMENT
VALUE INPUT UNIT

5

NORMAL
MEASUREMENT
VALUE DATABASE

4

ABNORMALITY
DETERMINATION
UNIT

8

ABNORMALITY
EVENT MODEL
DATABASE

7

ABNORMALITY
CAUSE ESTIMATION
MODEL

6

ABNORMALITY
CAUSE
ESTIMATION UNIT

9

RESULT OUTPUT
UNIT

# FIG. 2

## FIG. 3

| TIME | SC1 | SC2 | | SC5 | SC6 | SD1 | | | |
|---|---|---|---|---|---|---|---|---|---|
| | SHAFT VIBRATION [um] | SHAFT VIBRATION [um] | · · · | SUCTION PRESSURE [MPa] | DISCHARGE PRESSURE [MPa] | SHAFT VIBRATION [um] | · · · | ROTATIONAL SPEED [min⁻¹] | · · · |
| : | : | : | : | : | : | : | : | : | : |
| 14:22:00 | 15.1 | 13.2 | | 0.3 | 12.1 | 8.6 | | 12103 | |
| 14:23:00 | 16 | 14.1 | | 0.3 | 12.5 | 9.5 | | 12135 | |
| 14:24:00 | 14.5 | 12.3 | | 0.3 | 12.6 | 8.2 | | 12112 | |
| 14:25:00 | 14.5 | 12.1 | | 0.3 | 12.4 | 8.3 | | 12129 | |
| 14:26:00 | 15.3 | 13.5 | | 0.3 | 12.7 | 9.0 | | 12131 | |
| 14:27:00 | 15.7 | 13.7 | | 0.3 | 12.5 | 9.1 | | 12127 | |
| 14:28:00 | 15.2 | 13.3 | | 0.3 | 12.3 | 8.9 | | 12118 | |
| : | : | : | : | : | : | : | : | : | : |

EP 4 542 322 A1

## FIG. 4

FIG. 5

# FIG. 6

## INTERNATIONAL SEARCH REPORT

International application No.

**PCT/JP2023/012678**

### A. CLASSIFICATION OF SUBJECT MATTER

**G05B 23/02**(2006.01)i
FI: G05B23/02 302Y

According to International Patent Classification (IPC) or to both national classification and IPC

### B. FIELDS SEARCHED

Minimum documentation searched (classification system followed by classification symbols)

G05B23/02

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y | JP 10-20930 A (HITACHI, LTD.) 23 January 1998 (1998-01-23)<br>paragraphs [0007]-[0030], fig. 1-2 | 1-10 |
| Y | WO 2016/195092 A1 (HITACHI, LTD.) 08 December 2016 (2016-12-08)<br>paragraphs [0014]-[0037], fig. 1-4 | 1-10 |
| Y | JP 2017-62728 A (MITSUBISHI HEAVY IND., LTD.) 30 March 2017 (2017-03-30)<br>paragraph [0041], fig. 5 | 5-8 |

☐ Further documents are listed in the continuation of Box C.      ☑ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| **28 April 2023** | **16 May 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2023/012678**

| Patent document cited in search report | | | Publication date (day/month/year) | Patent family member(s) | Publication date (day/month/year) |
|---|---|---|---|---|---|
| JP | 10-20930 | A | 23 January 1998 | (Family: none) | |
| WO | 2016/195092 | A1 | 08 December 2016 | US 2018/0157249 A1 paragraphs [0019]-[0047], fig. 1-4 | |
| JP | 2017-62728 | A | 30 March 2017 | US 2018/0174694 A1 paragraph [0045], fig. 5 EP 3299918 A1 | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2015148867 A